Europäisches Patentamt

European Patent Office

Office européen des brevets

(19)

(11) Numéro de publication: **0 268 537**
**A1**

## (12) DEMANDE DE BREVET EUROPEEN

(21) Numéro de dépôt: 87420289.8

(22) Date de dépôt: 27.10.87

(51) Int. Cl.⁴: **A 22 C 11/02**
A 22 C 11/12

(30) Priorité: 30.10.86 FR 8615513

(43) Date de publication de la demande:
25.05.88 Bulletin 88/21

(84) Etats contractants désignés:
AT BE CH DE ES GR IT LI LU NL

(71) Demandeur: ETABLISSEMENTS CHARLES FRERES & CIE, S.A.
F-42580 L'Etrat (FR)

(72) Inventeur: Pujol, Yves
15 Rue Plantevin
F-81000 Albi (FR)

(74) Mandataire: Dupuis, François
Cabinet Charras 3 Place de l'Hôtel-de-Ville BP 203
F-42005 St. Etienne Cédex 1 (FR)

(54) Dispositif entrant dans la fabrication en continu des saucisses et produits similaires à partir de la conception desdites saucisses jusqu'au ligaturage de leurs extrémités.

(57) Dispositif entrant dans la fabrication en continu des saucisses et produits similaires à partir de la conception desdites saucisses jusqu'au ligaturage de leurs extrémités. Selon l'invention, ce dispositif comprend un mécanisme disposé sur un bâti de machine assurant de façon automatique le remplissage d'un boyau pour la réalisation de saucisses en vue de leur évacuation directe vers un poste opératoire de ligaturage des extrémités des saucisses ou poste intermédiaire de traitement ledit mécanisme comprenant une canule (3) orientable angulairement par rapport au plan du bâti (1) support de l'ensemble des moyens de mécanisme et sur laquelle est disposée le boyau à remplir, la canule étant en liaison directe avec le poussoir du remplissage de viande ; la canule comprenant un moyen de contrôle de la pression de remplissage du boyau ; en regard de ladite canule et sur le bâti (1) étant prévus des moyens susceptibles de former et délimiter des saucisses en continu, en fonction des instructions données par le système portionneur du poussoir, de positionner les extrémités desdites saucisses sur des moyens de transfert ou d'évacuation, et de couper la partie vide de boyau entre deux saucisses préformées.

FIG.1

EP 0 268 537 A1

**Description**

L'invention a pour objet un dispositif entrant dans la fabrication en continu des saucisses et produits similaires à partir de la conception desdites saucisses jusqu'au ligaturage de leurs extrémités.

La déposante a mis au point différentes machines à ficeler les extrémités de saucisses et produits similaires qui ont fait l'objet de plusieurs Brevets. Selon ces Brevets, on considérait que les saucisses pleines de viande avant leur présentation devant les mécanismes à ligaturer, étaient acheminées soit manuellement par un opérateur en vue des opérations de ligaturage à effectuer, soit par un mécanisme de présentation du produit tel que décrit par exemple dans la Demande Européenne 0080422. Dans ce cas, le mécanisme de présentation avait un fonctionnement intermittent et alternatif étroitement lié au ligaturage une à une des saucisses.

Le but recherché selon l'invention était d'automatiser en continu les opérations en amont de la phase de ligaturage des saucisses particulièrement adapté par exemple et non limitativement à des machines à ficeler susceptibles de réaliser simultanément n ligatures ainsi que décrit dans la Demande de Brevet français 85.16248.

Selon les conditions et spécificités de chaque ligne automatique de traitement des saucisses et produits similaires, le mécanisme de réalisation et de formation des saucisses, objet de la demande, peut être agencé pour autoriser l'évacuation directe des saucisses vers la zône de ligaturage. En variante, il peut autoriser l'évacuation des saucisses sur une ligne transfert susceptible de constituer un stock tampon de saucisses à adresser vers une ou plusieurs zônes de ligaturages différents d'une machine à ficeler, objet d'une seconde demande divisionnaire issue de la demande de Brevet Français principal nº 86.15513.

Selon une première caractéristique de l'invention, le dispositif comprend un mécanisme disposé sur un bâti de machine assurant de façon automatique le remplissage d'un boyau pour la réalisation de saucisses en vue de leur évacuation directe vers un poste opératoire de ligaturage des extrémités des saucisses ou poste intermédiaire de traitement ; ledit mécanisme comprenant une canule sur laquelle est disposée le boyau à remplir, la canule étant en liaison directe avec le poussoir du remplissage de viande en regard de ladite canule et sur le bâti étant prévu des moyens susceptibles de former et délimiter des saucisses en continu, avec une alternance de parties de boyaux remplies et de parties de boyaux vides, en fonction des instructions données par le système portionneur du poussoir, de positionner les extrémités desdites saucisses sur des moyens de transfert et de préhension, et de couper la partie vide de boyau entre deux saucisses préformées.

Ces caractéristiques et d'autres encore ressortiront bien de la suite de la description.

Pour fixer l'objet de l'invention illustrée d'une manière non limitative aux figures des dessins où :

La figure 1 est une vue en perspective illustrant le dispositif selon l'invention comprenant le mécanisme de remplissage et de formation des saucisses.

Les figures 2, 3, 4, 5 et 6 sont des vues à caractères schématiques illustrant les différentes phases de formation et de remplissage des saucisses, selon la figure 1.

Le dispositif selon l'invention comprend :
- un mécanisme assurant de façon automatique, le remplissage du boyau et la formation successive des saucisses en vue de leur évacuation directe vers la machine ou mécanisme à ficeler les extrémités des saucisses ou vers un autre poste de traitement ;
- Ce mécanisme peut coopérer ou non, en aval avec un second mécanisme de transfert des saucisses préformées vers la zône de ligaturage en constituant un stock tampon, décrit dans la seconde demande divisionnaire issue de la demande de brevet 86.15513. Ce second mécanisme peut être agencé et permettre un actionnement des moyens de transfert des saucisses vers un ou plusieurs postes de ligaturage.

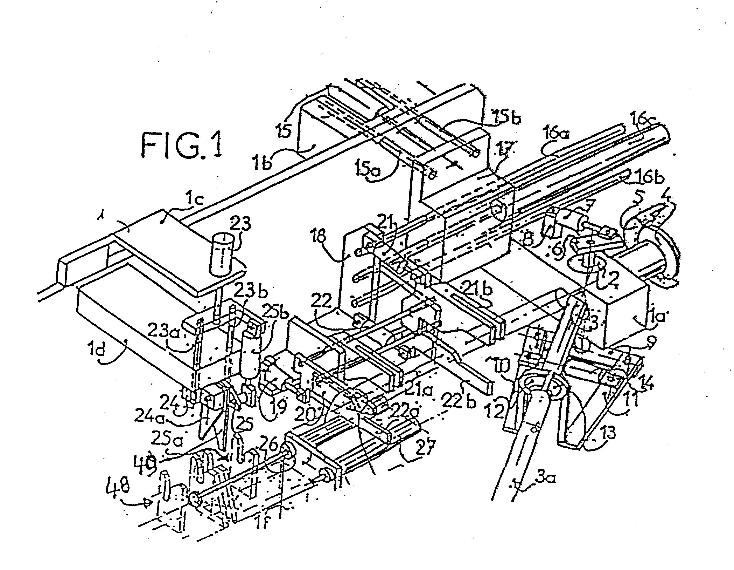

On se réfère maintenant au mécanisme précité, objet de la présente demande, notamment illustré aux figures 1 à 6. Il comprend tout d'abord à partir d'un bâti (1) constituant le plan de référence plusieurs éléments (1a), (1b), (1c), (1d), disposés dans des plans appropriés constituant les supports de certains des moyens participant au mécanisme selon l'invention.

Un élément (1a) constitue le support du boisseau porte-canule (2), la canule étant elle-même référencée en (3). Ce boisseau est relié au poussoir de viande intégré à la machine de conditionnement de la viande par un conduit, la collerette (4) et l'écrou (5). Par une impulsion émanant de cet ensemble jouant la fonction d'un interface, le poussoir non illustré aux dessins envoie au-travers de la canule une quantité de viande donnée correspondant à la masse d'une saucisse. Cette canule est montée sur un porte-canule pouvant lui assurer un déplacement angulaire. A cet effet, une biellette (6) d'entraînement est montée en bout et à la partie supérieure du porte-canule. Cette biellette est associée à un vérin (7) disposé horizontalement et monté sur un support (8).

Par ailleurs et à titre complémentaire, la canule (3) reçoit à un endroit approprié de sa longueur deux demi-embouts (12 - 13) coniques en élastomère par exemple. La fonction des demi-embouts réside dans le fait qu'ils agissent comme des pinces et permettent de contrôler l'écoulement du boyau tiré par la viande et donc la tension de remplissage. Ces paramètres peuvent être réglés car les deux demi-embouts sont associés à des bras profilés (11) articulés entre eux sous l'action de commande d'un vérin (14), l'ensemble agissant comme un frein. Les deux bras (11) précités sont solidaires d'un support (9) lié au boisseau (2) porte-canule ; cet ensemble canule et frein pivotant sous l'action du vérin (7).

En position initiale ou démarrage d'un cycle, la canule (3) se trouve dans la position dessinée en traits fins interrompus dans l'alignement de l'axe du poussoir. Le vérin (7) qui permet d'assurer la rotation de la canule et du frein se trouve alors en position type sortie, tel qu'il apparaît au dessin.

De manière complémentaire en regard de la canule et de son moyen support sont prévus à partir du bâti (1) différents moyens susceptibles de former et délimiter deux saucisses consécutives à partir du boyau vide (3a) disposé sur la canule en fonction des instructions données par le système portionneur du poussoir, de positionner les extrémités desdites saucisses sur des moyens de transfert ou d'évacuation, et de couper le boyau entre deux saucisses préformées.

Plus spécifiquement, un premier moyen consiste en un groupe de deux paires de pinces de préhension du boyau (21a -22a) (21b - 22b) montées sur des tiges de guidage (56) communes et articulées entre elles par des vérins supérieur et inférieur (21) (22) disposés horizontalement et fixés de manière appropriée à un support (18) profilé de manière particulière. En outre, le support (18) précité est agencé latéralement du côté de la paire de pinces (21a - 22a) à l'opposé du support boisseau porte canule (1a) pour recevoir un doigt (20) profilé commandé en position par un vérin (19). Ce vérin est monté sur le support (18) tandis que le doigt est monté à guidage sur les prolongements des tiges (56).

Ledit support (18) desdits moyens de préhension du boyau est susceptible d'être déplacé dans un mouvement longitudinal et/ou dans un mouvement transversal par rapport au bâti (1).

Plus particulièrement, il est prévu à partir du bâti (1), un élément support (1b) disposé sur la face arrière dudit bâti autorisant le positionnement d'un vérin (15) avec tiges de guidage (15a - 15b) assurant le mouvement transversal du dispositif de préhension du boyau. L'extrémité de la tige du vérin (15) est associée à un moyen support central (17) des guidages longitudinaux et transversaux, ledit support (15) pouvant coulisser le long des tiges de guidage (15a - 15b). En outre, ledit support (17) est agencé dans sa partie inférieure pour recevoir le vérin (16c) et ses tiges de guidage (16a - 16b) correspondantes susceptibles de déplacer longitudinalement le support (18) des organes de préhension du boyau.

Selon une autre disposition, il est prévu dans du plan au-delà des organes de préhension du boyau, des moyens susceptibles de recevoir les extrémités des saucisses en vue de leur évacuation vers un autre poste opératoire qui peut être le ligaturage de la saucisse ou vers un poste de transfert, ainsi que des moyens pour sectionner la partie de boyau vide entre deux saucisses consécutives.

Plus spécifiquement et d'une manière non limitative, on a prévu des moyens pour recevoir les extrémités des saucisses sous forme de pinces susceptibles de saisir, maintenir lesdites extrémités pour être translatées ensuite vers un autre poste opératoire tels que ceux précités ; ce type de pinces n'a pas été illustré aux figures des dessins. Il a été représenté à la figure 1, à titre indicatif et non limitatif, des moyens sous formes de deux chariots (48 - 49) agencés avec des flasques profilés pour recevoir et maintenir les extrémités desdites saucisses. Le positionnement desdits chariots s'effectue par exemple et de manière non limitative selon la mise en oeuvre décrite dans la seconde Demande Divisionnaire de la Demande de Brevet Français n° 86.15513. Les chariots comprennent en outre un élément complémentaire formant mâchoire articulée commandée par des moyens appropriés susceptibles de pincer et retenir les parties de boyau correspondantes. Au-dessus du plan desdits moyens de serrage des extrémités de saucisses, il est prévu un dispositif coupe-boyau situé en aval par rapport aux moyens de préhension du boyau. Le dispositif coupe-boyau est positionné par rapport à deux plans parallèles et horizontaux (1c, 1d) du bâti. A cet effet, un vérin (23) est fixé au plan (1c) avec sa tige en regard vers le bas. L'extrémité de la tige du vérin (23) est solidaire d'un profilé en L (57) horizontal, susceptible d'être déplacé de haut en bas et inversement pour transmettre le ment précité par des tiges de liaison (23a, 23b) du corps du coupe-boyau (24). Lesdites tiges (23a - 23b) traversent dans l'épaisseur le plan (1d) du bâti pour assurer une parfaite tenue et guidage du coupe- boyau. Celui-ci comprend une lame fixe (24a) et une lame mobile (25a) associée à un porte-lame (25) oscillant commandé à pivotement par un vérin (25b) disposé verticalement et fixé à l'extrémité du profilé en L intermédiaire (57).

Il est prévu en outre des moyens (26 - 27) susceptibles d'agir en poussée sur les chariots (48 - 49) après les opérations de sectionnement de la partie vide de boyau entre deux saucisses, en vue de l'évacuation de l'un des chariots (48) supportant la seconde extrémité d'une saucisse devenue définitivement indépendante, et en vue de la poussée de l'autre chariot (49) en attente du sectionnement de la seconde extrémité de la saucisse consécutive. Les chariots sont alors évacués directement vers le poste de ligaturage ou vers une zone tampon préalable audit poste de ligaturage.

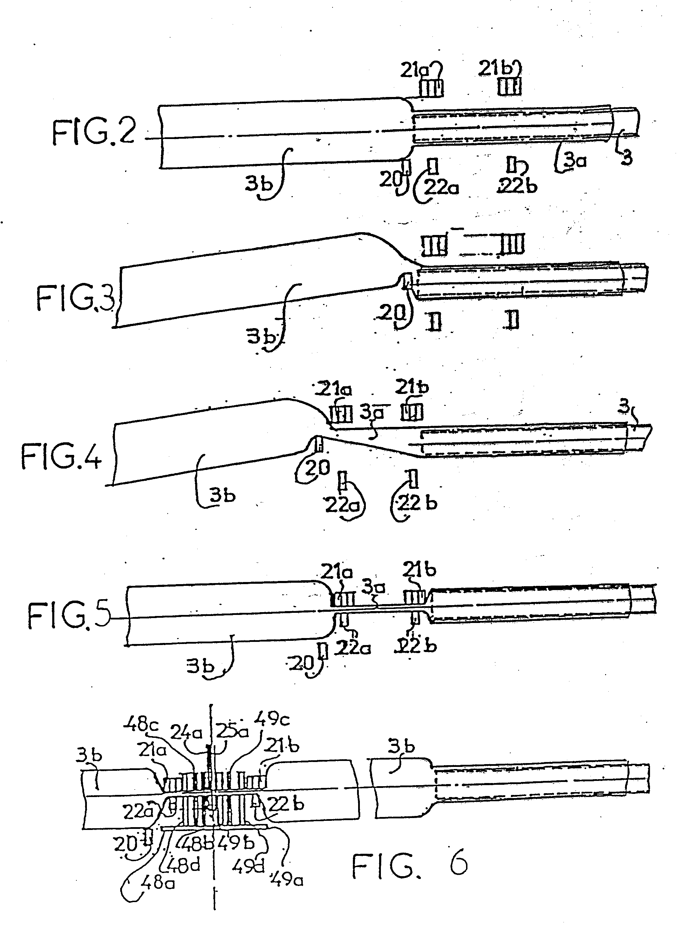

Il convient dès lors d'exposer le fonctionnement de ce mécanisme de remplissage et de formation des saucisses tels qu'illustré schématiquement aux figures 2 à 6.

Au démarrage du cycle, la canule (3) se trouve dans la position illustrée en traits fins dans l'axe du poussoir. Le vérin (7) qui permet d'assurer le pivotement angulaire horizontal de la canule se trouve en position tige sortie. En début de cycle démarré entre deux saucisses, on a illustré figure 2 la fin du remplissage d'une saucisse. La canule (3) et ses moyens (12 - 13) de contrôle de l'écoulement du boyau, sont dans la position illustrée en traits fins, c'est-à-dire parallèle au plan du bâti. Une partie du boyau (3) a été remplie et forme la saucisse (3b). Dans cette position, les moyens de préhension du boyau (21a - 22a) (21b - 22b) sont en position en regard de la canule (3), et le doigt (20) se trouve disposé dans un plan sensiblement en regard de l'extrémité de la canule. Par ailleurs, la pression à l'intérieur du vérin (14) a été annulée rendant libre le glissement du boyau à travers la pince.

Selon une première phase opératoire illustrée figure 3, les différents moyens (20), (21a - 22a) (21b - 22b) sont avancés sous l'action du vérin (15) de sorte que les pinces (21a - 22a), (21b - 22b) en position ouverte sont disposées autour de la canule et le doigt (20) à l'extrémité de celle-ci. Le doigt (20) est alors actionné par son vérin (19), provoquant son élévation, ce qui a pour effet de soulever le boyau devant la canule, d'étrangler le film de pâte de viande et donc, de permettre une rupture de ce film de telle sorte que la viande se trouve séparée entre celle contenue dans la saucisse (3b) et celle contenue à l'intérieur de la canule (3).

La phase suivante illustrée à la figure 4 consiste dans le déplacement dans un plan parallèle au bâti sous l'action du vérin (16c) des pinces (21a, 22ab) (21b - 22b) toujours en position ouverte et du doigt (20). Le doigt (20) étant dans une position d'affleurement par l'extérieur de la pince (21a), le déplacement des moyens précités a pour effet d'entraîner une longueur définie de boyau vide de viande au-delà de la canule (3).

Dans la phase suivante illustrée à la figure 5, la pince formée par les éléments (21b - 22b) a dépassé l'extrémité de la canule. Dès lors, les pinces (21a - 22a) (21b - 22b) sont actionnées par les vérins (21 - 22) en vue de leur fermeture et serrage du boyau. On voit ainsi apparaître l'extrémité fermée de la saucisse (3b) et la mise en forme de la première extrémité de la saucisse consécutive. Lorsque la partie de boyau vide est maintenue par les pinces (21a - 22a) (21b - 22b), la fonction du doigt (20) est terminée et celui-ci sous l'action de commande du vérin (19) reprend sa position basse. Le poussoir peut alors commencer à envoyer de la viande dans la nouvelle saucisse et les moyens (12 - 13) de contrôle et d'écoulement du boyau sont alors à nouveau mis sous pression de façon à assurer le freinage.

La phase suivante illustrée figure 6 montre la translation continue des pinces (21a - 22a) (21b - 22b) et du doigt (20), jusqu'à ce que la partie médiane de la section de boyau vide entre deux saucisses consécutives se trouve à l'aplomb du dispositif coupe-boyau défini par les lame et contre-lame (24a -25a) en position ouverte. Le poussoir continue son action de remplissage de la seconde saucisse. Au cours de cette opération, la canule (3) pivote angulairement sous la commande du vérin (7), ce qui permet d'orienter la forme courbe de la saucisse.

Simultanément à ce positionnement, des pinces ou chariots de transfert (48-49) seront positionnés par des moyens et mécanismes appropriés pour venir s'intercaler autour de la partie vide de boyau entre deux saucisses consécutives, et entre les pinces (21a - 22a) (21b - 22b). Des mâchoires disposées sur les chariots (48, 49) ou des pinces assurent le serrage des parties correspondantes du boyau de part et d'autre du coupe-boyau. Le coupe-boyau intervient alors en descendant sous l'action de son vérin pour couper le boyau (3a) entre les éléments (48b -49b) des deux chariots (48 - 49) et remonte immédiatement après. Les pinces (21a - 22a) (21b - 22b) s'ouvrent alors, ce qui permet au support (18) de se retirer sous l'action inverse du vérin (15) puis du vérin (16). Des moyens du type vérins (26 -27) éloignent alors les chariots respectivement (48 - 49) ou les pinces pour évacuer d'une part la saucisse (3b) dont les deux extrémités ont été formées, et partiellement le chariot (49) maintenant la saucisse suivante dont la seconde extrémité devra être formée durant le cycle opératoire suivant. La canule (3) revient en position initiale.

Dans le cas particulier de la fin d'un boyau ou d'un boyau éclaté, qui ne doit pas poursuivre le cycle précité, suite à un ordre donné par l'opérateur, seul le vérin (26) est actionné. Dans ces conditions, seul le chariot (48) correspondant à la fin de la saucisse (3b) sera évacué. En variante de construction, la pince correspondante sera évacuée. L'autre chariot (49) ou pince correspondante sera déplacée provisoirement pour l'éjection du morceau de boyau ou boyau éclaté puis reprendra son poste.

Le mécanisme ainsi décrit permet une automatisation de la production et formation des saucisses en vue du ligaturage ultérieur de leurs extrémités. Les saucisses ainsi formées sont soit évacuées vers le poste de ligaturage, soit vers une zône transfert permettant la constitution d'un stock tampon intermédiaire à la phase de ligaturage constituée par un ou plusieurs postes.

En variante, sans sortir du cadre de l'invention, il est prévu une canule en position fixe mettant ainsi le boyau dans une position longiligne et non pliée, cela en fonction du poste de ligaturage situé en aval.

**Revendications**

-1- Dispositif entrant dans la fabrication en continu de saucisses et produits similaires en amont de l'opération de ligaturage des extrémités desdites saucisses, caractérisé en ce qu'il comprend un mécanisme disposé sur un bâti de machine assurant de façon automatique le remplissage d'un boyau pour la réalisation de saucisses en vue de leur évacuation directe vers un poste opératoire de ligaturage des extrémités des saucisses ou poste intermédiaire de traitement ; ledit mécanisme comprenant une canule (3) sur laquelle est disposée le boyau à remplir, la canule étant en liaison directe avec le poussoir du remplissage de viande ; en regard de ladite canule et sur le bâti (1) étant prévus des moyens susceptibles de former et délimiter des saucisses en continu, avec une alternance de parties de boyaux remplies et de parties de boyaux vides en fonction des instructions données par le système portionneur du poussoir, de positionner les extrémités desdites saucisses sur des moyens de transfert et de préhension, et de couper la partie vide de boyau entre deux saucisses préformées.

-2- Dispositif selon la revendication 1 caractérisé en ce que la canule (3) comprend un moyen de contrôle de la pression de remplissage du boyau.

-3- Dispositif selon la revendication 2, caractérisé en ce que la canule (3) est montée sur un boisseau porte-canule (2) orientable par rapport au bâti, ladite canule étant et liaison directe avec le poussoir de viande ; ladite canule étant agencée pour recevoir un moyen constitué par des embouts (12 - 13) agissant comme des pinces et permettant de contrôler l'écoulement du boyau tiré par la viande et donc la tension de remplissage, lesdits embouts étant à écartement réglable par des moyens associés à la canule et commandés lors du cycle de remplissage, l'ensemble agissant comme un frein.

-4- Dispositif selon la revendication 1, caractérisé en ce que sur le bâti, en regard de la canule est disposé un premier moyen consistant en un groupe de deux paires de pinces de préhension du boyau (21a - 22a) (21b - 22b) articulées, montées sur un support (18) et assujetties à un double mouvement en déplacement longitudinal et transversal par rapport au bâti (1) par des moyens appropriés (19, 15, 17, 16c), lesdites pinces (21a - 22a) (21b - 22b) étant susceptibles dans une combinaison des mouvements précités d'entourer la canule (3) ; ledit support (18) présentant un prolongement recevant un doigt (20) profilé articulé et commandé en déplacement vers le haut, ledit doigt se trouvant dans un plan à l'extrémité extérieure de la canule (3) en position repos, et adjacent à l'une des pinces.

-5- Dispositif selon la revendication 1, caractérisé en ce que au-delà des organes de préhension du boyau sont prévus des moyens (48 - 49) recevant les extrémités des saucisses remplies en vue de leur serrage et susceptibles d'être translatées ou évacuées vers un autre poste opératoire ; au-dessus desdits moyens de serrage étant prévu un moyen coupe-boyau situé en aval des organes de préhension dudit boyau.

-6- Dispositif selon la revendication 5 caractérisé en ce que les moyens de transfert et de préhension sont des paires de chariots agencés avec des moyens supports de machoires en vue du serrage des extrémités des saucisses.

-7- Dispositif selon la revendication 5, caractérisé en ce que le coupe-boyau est positionné par rapport à deux plans parallèles et horizontaux (1c - 1d) du bâti et comprend une lame fixe (24a) et une lame mobile (25a) associée à un porte-lame (25) ; ledit coupe-boyau étant translaté de haut en bas lors de son fonctionnement.

-8- Dispositif selon la revendication 5, caractérisé en ce qu'il comprend des moyens (26 - 27) susceptibles d'agir en poussée sur les moyens de transfert et de préhension des extrémités des saucisses.

-9- Dispositif selon la revendication 8 caractérisé en ce que les moyens (26-27) éloignent un premier moyen de transfert support d'une saucisse dont les deux extrémités ont été formées, et partiellement d'un second moyen de transfert maintenant la saucisse suivante dont la seconde extrémité devra être fermée.

-10- Procédé de mise en oeuvre selon le dispositif selon les revendications 1, 2, 3, 4, 5, 6, 7, 8 et 9 caractérisé en ce que, au démarrage du cycle, la canule (3) est dans l'axe du poussoir ; les moyens de pression (12 - 13) ne sont pas en service ; une partie de boyau a été remplie et forme la saucisse ; les moyens de préhension du boyau (21a - 22a) (21b - 22b) sont avancés en position ouverte pour entourer la canule ; le doigt (20) qui est avancé est actionné en élévation pour soulever le boyau devant la canule ; lesdits moyens de préhension du boyau et le doigt étant translatés en assurant un défilement du boyau sur la canule ; après que les pinces de préhension aient dépassés la canule (3), lesdits moyens se ferment et serrent le boyau définissant une partie intermédiaire de boyau vide de viande ; le doigt (20) se retire ; le poussoir envoie de la viande dans le nouvelle saucisse ; les moyens (12 - 13) de contrôle et d'écoulement du boyau sont mis en pression ; simultanément, des moyens de transfert et de préhension sont positionnés pour s'intercaler et se fermer autour de la partie vide de boyau entre deux saucisses consécutives et entre les moyens (21a -22a) (21b -22b) ; le coupe-boyau intervient pour sectionner la partie vide du boyau ; les moyens (21a -22a) (21b -22b) s'ouvrent et se retirent en position initiale ; des moyens (26 -27) permettent l'éloignement des moyens de transfert et de préhension des extrémités des saucisses, d'une part avec une évacuation complète d'un moyen de transfert et de préhension de la saucisse dont les deux extrémités ont été formées, et partiellement pour un moyen de transfert et/ou de préhension de la saucisse consécutive dont une seule extrémité a été formée.

-11- Procédé selon la revendication 8 caractérisé en ce que la canule pivote angulairement afin que les moyens de contrôle et d'écoulement (12-13) du boyau soit mis en pression, pour orienter la forme courbe de la saucisse.

-12- Procédé selon la revendication 8 et dans son application à un traitement en continu en amont de la phase de ligaturage des extrémités des saucisses combiné avec un mécanisme de transfert vers la zone de ligaturage ou zone tampon.

0268537

FIG.1

0268537

FIG.2

FIG.3

FIG.4

FIG.5

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 206 675 (HEIMBOLD) <br> * Pages 6-8; revendication 2 * <br> --- | 1-3,11 | A 22 C 11/02 <br> A 22 C 11/12 |
| A | DE-A-2 605 745 (HANDTMANN) <br> --- | | |
| A | DE-C- 626 659 (KREHER) <br> --- | | |
| A | FR-A-1 414 569 (NIEDECKER) <br> --- | | |
| D,A | EP-A-0 080 422 (PUJOL) <br> ----- | | |

DOMAINES TECHNIQUES RECHERCHES (Int. Cl.4)

A 22 C

**Le présent rapport a été établi pour toutes les revendications**

| Lieu de la recherche | Date d'achèvement de la recherche | Examinateur |
|---|---|---|
| LA HAYE | 26-01-1988 | DE LAMEILLIEURE D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)